# EUROPEAN PATENT APPLICATION

(11) **EP 1 920 660 A2**
(43) Date of publication of application: **14.05.2008**
(21) Application number: 07021443.2
(22) Date of filing: 04.11.2007
(51) Int. Cl.: A23B 4/023, A23B 4/005, A23L 1/31, A23L 1/314

(54) **Process for working pieces of meat**

(30) Priority: 07.11.2006 IT TO20060791; 30.01.2007 IT TO20070065
(71) Applicant: Azienda Agricola Scaglia di Paolo , Graziano e Mauro S.S., 10090 Cascine Vica Rivolti (TO) (IT)
(72) Inventor: Scaglia, Graciano, 10090 Cascine Vica Rivolti ( TO ) (IT)
(74) Representative: Garavelli, Paolo

(57) **Abstract**

A process is described for working pieces of meat, comprising the steps of providing pieces of meat; preparing a saline; salting such pieces of meat with the saline; cooking the pieces of meat; cooling the pieces of meat; dividing the pieces of meat; and dressing and packaging in a foodstuffs package the divided pieces of meat.

## Description

The present invention refers to a process for working pieces of meat, in particular of bovine origin.

It is known that the art proposes an extremely high number of processes for working pieces of meat, being of bovine, ovine or swine origin. In general, such processes typically aim to two main objectives, that for the majority of times are mutually related: one is reaching a better storage (in terms of time and quality of meat) of worked pieces and the other one is deriving, from raw and rough meat, a finished product, both ready for its consumption or presented as semifinished product needing a further cooking, having organoleptic, aromatic and tasting characteristics that are different, improved and hours more complex and articulated.

Typically, reaching the above second purpose is the result of workings whose object is the alternative use or the recovery of parts or cuttings of animals, that otherwise would be discarded, since they are not requested, or requested enough, commercially in their raw form, due both to their taste and the seasonality of consumption of particular foodstuff.

One of the cases that fall within the above described hypotheses deals, in particular, with the bovine cutting generally called "breast tip" ("punta di petto"); it is known that such cutting is generally used, obviously after having been suitably cooked, for preparing the well-known plate called "boiled meat" ("bollito"). It is also evident, as common experience, that such plate is strongly subjected to a seasonality of demand, since, both due to its own contents of fats and due to the extremely nutritious form in which it is typically presented, it is ill suited to human dietary needs in hottest seasons. Consequently, it is not rare that in such seasons the "breast tip" cutting has such a high decrease in its demand that it is unadvisable for the field operators to prepare it, consequently wasting a part of meat that otherwise and anyway would be eatable.

In some cases, in order to solve the above inconvenience, the "breast tip" cutting can be produced as veal cutlets and used as replacement of more precious and costly cuttings for a consumption, usually, within school or company canteens or mass restoration services. Also in these latter cases, anyway, due to summer working periods and the consequent decrease of users in the above restoration services, the "breast tip" cutting is subjected to a not neglectable demand decrease.

The prior art proposes some processs for preparing pieces of meat such as the "breast tip" cutting aimed to extend their storage and/or their organoleptic features: in particular, Russian patents RU2207025, RU2208345 and RU2208353 disclose processs of preparation that provide, among others, a step of smoke-curing; instead, Russian patent RU2183936 discloses a process for preparing that provides for the use of preservants such as phosphates and ascorbic acid.

Object of the present invention is solving the above prior art problems by providing a process for working pieces of meat that allows obtaining foodstuffs characterised by a lower seasonality of consumption.

Another object of the present invention is providing a process for working pieces of meat that allows obtaining foodstuffs characterised by a high added value.

Another object of the present invention is providing a process for working pieces of meat that improves their organoleptic features and/or its storage without using a smoke-curing step.

Another object of the present invention is providing a process for working pieces of meat that improves their storage without using phosphates and/or ascorbic acid as preservants.

The above and other objects and advantages of the invention, as will result from the following description, are obtained with a process for working pieces of meat as claimed in claim 1. Preferred embodiments and non-trivial variations of the present invention are the subject matter of the dependent claims.

The present invention will be better described by some preferred embodiments thereof, provided as a non-limiting example.

The process according to the present invention can be aimed for working pieces of meat of bovine, ovine or swine origin. In particular, the process according to the present invention finds its best efficiency in working pieces of meat of bovine origin: preferably, the pieces of meat subjected to the process according to the present invention are the anatomic part of the stomach with bone (the so-called "breast tip" cutting) of a bovine in the calf, "vitellone", he-steer, she-steer category and/or complying with the EEC Classification of carcasses.

In the following specification, merely as an example and to simplify the description, the doses of the different necessary ingredients in the various steps of the process according to the present invention will be dimensioned under the assumption of having to work pieces of meat having a weight included between 6 Kg and 8 Kg. It is wholly clear that, for preparing pieces of meat with different weights from the described ones, doses of ingredients provided for implementing the process according to the present invention will proportionally change.

In detail, the process according to the present invention therefore comprises the steps of:
a) providing pieces of meat, such pieces being preferably a "breast tip" cutting of a bovine animal. Merely as an example, such pieces of meat have a weight included between 6 Kg and 8 Kg;
b) preparing a saline; in particular, the saline is preferably prepared according to the following substeps:
   b1) preparing a first solution by dissolving in an amount Q₁ of water, preferably cold or at room temperature, the following components expressed in percentage in weight with respect to the weight of the amount of water:
      - 6% to 10%, preferably 8%, of salt;
      - 0.05% to 0.15%, preferably 0.1%, of saltpetre (in particular, the doses of saltpetre must follow, where provided, the requirements stated by legal standards); preferably, the above saltpetre is sodium nitrite E250;
      - 0.5% to 1.5%, preferably 1%, of sugar;
      - 2% to 3%, preferably 2.5%, of spirits of the "marsala" type.
      For working, according to the process of the present invention, pieces of meat whose weight is included between 6 Kg and 8 Kg, the weight of the amount of water Q₁ is preferably included between 98 Kg and 102 Kg, still more preferably equal to 100 Kg;
   b2) preparing a second solution by keeping boiling, for a period of time included between 18 minutes and 22 minutes, preferably for a period of time equal to 20 minutes, an amount Q₂ of water containing the following components expressed in percentage in weight with respect to the weight of the amount of water:
      - 0.005% to 0.009%, preferably 0.005%, of black pepper;
      - 0.003% to 0.007%, preferably 0.005%, of whole or broken nutmeg;
      - 0.0015% to 0.0055%, preferably 0.0035%, of whole or broken cinnamon;
      - possibly miscellaneous spices and flavours preferably comprising:
         - 0.0015% to 0.0055%, preferably 0.0035%, of laurel; and/or
         - 0.0015% to 0.0055%, preferably 0.0035%, of rosemary; and/or
         - 0.0015% to 0.0055%, preferably 0.0035%, of cloves; and/or
         - 0.0015% to 0.0055%, preferably 0.0035%, of coriander; and/or
         - 0.0015% to 0.0055%, preferably 0.0035%, of juniper berries; and/or
         - 0.0015% to 0.0055%, preferably 0.0035%, of fennel seeds; and/or
         - 0.0015% to 0.0055%, preferably 0.0035%, of kummel; and/or
         - 0.0015% to 0.0055%, preferably 0.0035%, of whole or minced orange peels; and/or
         - 0.0015% to 0.0055%, preferably 0.0035%, of garlic; and/or
         - 0.0015% to 0.0055%, preferably 0.0035%, of onion;
      for working, according to the process of the present invention, pieces of meat whose weight is included between 6 Kg and 8 Kg, the weight of the amount di water Q₂ is preferably included between 9 Kg and 11 Kg, still more preferably equal to 10 Kg;
   b3) letting cool at room temperature the second solution for a period of time included between 4 hours and 6 hours;
   b4) filtering the second solution and pouring the liquid portion of such second solution into the first solution;
c) salting the pieces of meat with the above saline. In particular, such step preferably comprises the substeps of:
   c1) manually or automatically injecting the saline inside various points of the pieces of meat till a percentage is reached that is included between 20% and 30%, preferably equal to 25%, of the weight of the pieces of meat (such percentage can obviously change depending on meat thickness and consistency, and on possible dishomogeneities being present):
      such operation is preferably performed through a substantially known, manually or electrically actuated pump, that at a first end thereof sucks the saline, while at the other end thereof is connected to a spraying gun equipped with one or more needles whose length is about 20 cm, adapted to be inserted inside the meat to inject the saline therein;
   c2) working the pieces of meat with a nerve-removing machine;
   c3) immersing the pieces of meat into the saline for a period of time preferably included between 46 hours and 50 hours, still more preferably equal to 48 hours;
d) cooking the pieces of meat; preferably such step provides for cooking with steam or in water or in a solution of water and the above saline (preferably, the solution is composed of 50% in weight of water and 50% in weight of saline) the pieces of meat for a period of time preferably included between 1 hour and 3 hours, still more preferably equal to 2 hours. It is wholly clear that, for the cooking step, other types of ovens and/or cooking modes can be used, that are within reach of any skilled person in the field that, being similar or equivalent, therefore fall within the scope of the present invention;
e) letting the pieces of meat cool. Such step can provide for cooling the pieces of meat in a heat-decreasing machine in order to make it reach, as quickly as possible, the temperature of 0°C;
f) dividing the pieces of meat; such step can preferably provide both for cutting into small cubes and for mincing the pieces of meat;
g) dressing and packaging in a foodstuffs package the pieces of meat divided in the previous step f). Preferably, the foodstuffs package is a glass vase. Depending on the various types of ointments that can be used, a first preferred variation of the process according to the present invention provides that this step comprises the substeps of:
   g1) spicing the pieces of meat divided into small cubes by sprinkling their external surface with dried spices and/or flavours, such as, for example, laurel, parsley, basil, garlic, cinnamon, etc.;
   g2) placing the divided pieces of meat inside the foodstuffs package;
   g3) pouring oil, preferably olive oil, inside the foodstuffs package, till the divided pieces of meat are covered.
   Alternatively, a second preferred variation of the process according to the present invention provides that this step comprises the substeps of:
   g1) spicing the minced pieces of meat by sprinkling their external surface with dried spices and/or flavours, such as, for example, laurel, parsley, basil, garlic, cinnamon, etc.;
   g2) placing the minced pieces of meat inside the foodstuffs package;
   g3) pouring oil, preferably olive oil, inside the foodstuffs package, till the minced pieces of meat are covered.
   Alternatively, a thir preferred variation of the process according to the present invention provides that this step comprises the substeps of:
   g1) spicing the divided pieces of meat by sprinkling their external surface with dried spices and/or flavours, such as, for example, laurel, parsley, basil, garlic, cinnamon, etc.;
   g2) placing the divided pieces of meat inside the foodstuffs package;
   g3) pouring tomato juice inside the foodstuffs package, till the divided pieces of meat are covered;
h) possibly sterilising the foodstuffs package.
   The inventive process can also comprise, after step e), the step of pressing the muscular masses of such pieces of meat.

## Claims

**1.** Process for working pieces of meat, **characterised in that** it comprises the steps of:
a) providing pieces of meat;
b) preparing a saline;
c) salting said pieces of meat with said saline;
d) cooking said pieces of meat;
e) cooling said pieces of meat;
f) dividing said pieces of meat; and
g) dressing and packaging in a foodstuffs package said divided pieces of meat.

**2.** Process according to claim 1, **characterised in that** it comprises, after said step e), the step of pressing muscular masses of said pieces of meat.

**3.** Process according to claim 1, **characterised in that** it comprises, after said step g), the step of sterilising said foodstuffs package.

**4.** Process according to claim 1, **characterised in that** said pieces of meat are a part of stomach with bone.

**5.** Process according to claim 1, **characterised in that** said pieces of meat are a "breast tip" cutting of a bovine animal.

**6.** Process according to claim 5, **characterised in that** said pieces of meat have a weight included between 6 Kg and 8 Kg.

**7.** Process according to claim 1, **characterised in that** step b) comprises the substeps of:
b1) preparing a first solution by dissolving in an amount (Q₁) of water:
- 6% to 10%, preferably 8%, of salt;
- 0.05% to 0.15%, preferably 0.1%, of saltpetre;
- 0.5% to 1.5%, preferably 1%, of sugar;
- 2% to 3%, preferably 2.5%, of spirits of a "marsala" type;
b2) preparing a second solution by keeping boiling, for a period of time included between 18 minutes and 22 minutes, preferably for a period of time equal to 20 minutes, an amount (Q₂) of water containing:
- 0.005% to 0.009%, preferably 0.005%, of black pepper;
- 0.003% to 0.007%, preferably 0.005%, of whole or broken nutmeg;
- 0.0015% to 0.0055%, preferably 0.0035%, of whole or broken cinnamon;
b3) letting cool at room temperature said second solution for a period of time included between 4 hours and 6 hours; and
b4) filtering said second solution and pouring a liquid portion of said second solution into said first solution.

**7.** Process according to claim 7, **characterised in that** said second solution further contains:
- 0.0015% to 0.0055%, preferably 0.0035%, of laurel; and/or
- 0.0015% to 0.0055%, preferably 0.0035%, of rosemary; and/or
- 0.0015% to 0.0055%, preferably 0.0035%, di cloves; and/or
- 0.0015% to 0.0055%, preferably 0.0035%, of coriander; and/or
- 0.0015% to 0.0055%, preferably 0.0035%, of juniper berries; and/or
- 0.0015% to 0.0055%, preferably 0.0035%, of fennel seeds; and/or
- 0.0015% to 0.0055%, preferably 0.0035%, of kummel; and/or
- 0.0015% to 0.0055%, preferably 0.0035%, of whole or minced orange peels; and/or
- 0.0015% to 0.0055%, preferably 0.0035%, of garlic; and/or
- 0.0015% to 0.0055%, preferably 0.0035%, of onion.

**8.** Process according to claim 7, **characterised in that** said amount (Q₁) of water is cold.

**9.** Process according to claim 7, **characterised in that** said amount (Q₁) of water is at room temperature.

**10.** Process according to claim 6 or 7, **characterised in that** a weight of said amount of water (Q₁) is included between 98 Kg and 102 Kg, more preferably equal to 100 Kg.

**11.** Process according to claim 6 or 7, **characterised in that** a weight of said amount of water (Q₂) is included between 9 Kg and 11 Kg, more preferably equal to 10 Kg.

**12.** Process according to claim 7, **characterised in that** said saltpetre is sodium nitrite E250.

**13.** Process according to claim 1, **characterised in that** step c) comprises the substeps of:
c1) injecting said saline inside various points of said pieces of meat till a percentage is reached included between 20% and 30%, preferably equal to 25%, of a weight of said pieces of meat;
c2) working said pieces of meat with a nerve-removing machine; and
c3) immersing said pieces of meat into said saline for a period of time preferably included between 46 hours and 50 hours, more preferably equal to 48 hours.

**14.** Process according to claim 13, **characterised in that** said substep c1) is performed through a pump and a spraying gun equipped with one or more needles.

**15.** Process according to claim 1, **characterised in that** said step d) occurs with steam or in water or in a solution of water and said saline.

**16.** Process according to claim 15, **characterised in that** said solution comprises in weight 50% of water and 50% of said saline.

**17.** Process according to claim 1, **characterised in that** said step d) provides for cooking said pieces of meat for a period of time preferably included between 1 hour and 3 hours, more preferably equal to 2 hours.

**18.** Process according to claim 1, **characterised in that** said step e) occurs in a heat-decreasing machine.

**19.** Process according to claim 1, **characterised in that** said step f) provides for cutting said pieces of meat into small cubes.

**20.** Process according to claim 1, **characterised in that** said step f) provides for mincing said pieces of meat.

**21.** Process according to claim 1 or 20, **characterised in that** said step g) comprises the substeps of:
g1) spicing said pieces of meat divided into small cubes by sprinkling their external surface with dried spices and/or flavours such as, for example, laurel, parsley, basil, garlic, cinnamon, etc.;
g2) placing said divided pieces of meat inside said foodstuffs package;
g3) pouring oil, preferably olive oil, inside said foodstuffs package, till said divided pieces of meat are covered.

**22.** Process according to claim 1 or 20, **characterised in that** said step g) comprises the substeps of:
g1) spicing said minced pieces of meat by sprinkling their external surface with dried spices and/or flavours, such as, for example, laurel, parsley, basil, garlic, cinnamon, etc.;
g2) placing said minced pieces of meat inside said foodstuffs package;
g3) pouring oil, preferably olive oil, inside said foodstuffs package, till said minced pieces of meat are covered.

**23.** Process according to claim 1 or 20, **characterised in that** said step g) comprises the substeps of:
g1) spicing said divided pieces of meat by sprinkling their external surface with dried spices and/or flavours, such as, for example, laurel, parsley, basil, garlic, cinnamon, etc.;
g2) placing said divided pieces of meat inside said foodstuffs package;
g3) pouring tomato juice inside said foodstuffs package, till said divided pieces of meat are covered.

**24.** Process according to claim 1, **characterised in that** said foodstuffs package is a glass vase.
